# EUROPEAN PATENT APPLICATION

(11) **EP 4 693 790 A1**
(43) Date of publication of application: **11.02.2026**
(21) Application number: 24193220.1
(22) Date of filing: 06.08.2024
(51) Int. Cl.: H02J 3/00, H02H 3/02, H02H 3/06

(54) **METHOD AND CONTROLLER FOR CONTROLLING A POWER TRANSMISSION NETWORK**

(71) Applicant: GE Vernova Technology GmbH, 5400 Baden (CH)
(72) Inventor: KUMAR, Amit, Stafford, ST16 1WS (GB); O'HEIDHIN, Gearoid, Stafford, ST16 1WS (GB)
(74) Representative: Openshaw & Co.

(57) **Abstract**

There is provided a method (300), and a controller (180), for controlling an arrangement of components (200) in a power transmission network (100). The arrangement of components (200) comprises a power converter (110), a main circuit breaker (215), a pre-insertion resistor (220), PIR, and a PIR bypass switch (225). The PIR (220) is configured to limit a current flowing through the power converter (110), the PIR bypass switch (225) is configured to selectively insert or bypass the PIR (220), and the main circuit breaker (215) is connected to an AC network (140). The main circuit breaker (215) is initially closed, and the PIR bypass switch (225) is initially open such that the PIR (220) is inserted and configured to limit the current flowing through the power converter (110). The method (300) comprises acquiring, by a controller (180), information indicative of a fault in the power transmission network (100). In response to acquiring the information indicative of a fault in the power transmission network: providing, by the controller (180), a first command to close the PIR bypass switch (225), whereby to bypass the PIR (220); and providing, by the controller (180), a second command to open the main circuit breaker (215), whereby to disconnect the power converter (110) from the AC network (140).

## Description

### FIELD OF THE INVENTION

The present invention relates to a method and a controller for controlling a power transmission network, and more particularly for controlling an arrangement of components in a power transmission network.

### BACKGROUND

In high voltage direct current (HVDC) power transmission networks alternating current (AC) power is typically converted to direct current (DC) power for transmission via a power transmission medium, for example overhead lines, under-sea cables, and/or underground cables. The conversion between AC power and DC power is utilised where it is necessary to interconnect AC and DC power, for example between an AC network and a HVDC transmission line. In power transmission networks, power conversion means, also known as converter stations (i.e., power converters in converter stations, power inverters etc.) are required at each interface or interconnection between AC and DC power to implement the required conversion from AC to DC or from DC to AC.

Power converters that are connected between an AC network and a power transmission medium may need to be energised in order to start operation of the power converter. A conventional process to energise a power converter may involve connecting a relatively high voltage source (for example, the AC network), through a pre-insertion resistor, to the power converter. The rate at which the power converter charges is limited by the ohmic value of the pre-insertion resistor, which is conventionally selected such that the rate at which the power converter and/or power transmission medium will charge tends not to damage the power converter. However, in order to withstand fault events, a conventional pre-insertion resistor also tends to have a power or energy rating that is selected in order to withstand a worst-case fault event, including, for example the type and duration of the fault event.

### SUMMARY OF THE INVENTION

According to a first aspect, there is provided a method for controlling an arrangement of components in a power transmission network, the arrangement of components comprising a power converter, a main circuit breaker, a pre-insertion resistor, PIR, and a PIR bypass switch. The PIR is configured to limit a current flowing through the power converter, the PIR bypass switch is configured to selectively insert or bypass the PIR, the main circuit breaker is connected to an AC network, the main circuit breaker is initially closed, and the PIR bypass switch is initially open such that the PIR is inserted and configured to limit any current that would flow through the power converter. The method comprises acquiring, by a controller, information indicative of a fault in the power transmission network. In response to acquiring the information indicative of a fault in the power transmission network: providing, by the controller, a first command to close the PIR bypass switch, whereby to bypass the PIR; and providing, by the controller, a second command to open the main circuit breaker, whereby to disconnect the power converter from the AC network.

The information indicative of a fault in the power transmission network may be indicative of a fault in only one phase, or two phases, or three phases, of the power transmission network.

The first command may be to close only one phase, or two phases, or three phases, of the PIR bypass switch.

The second command may be to open only one phase, or two phases, or three phases, of the main circuit breaker.

Acquiring may include determining, receiving, measuring, calculating, generating, and the like.

The second command may be provided after the first command has been provided

The second command may be provided simultaneously with the first command.

Prior to the main circuit breaker being initially closed, the main circuit breaker may be open. The method may further comprise providing, by the controller, an initiation command to close the main circuit breaker, whereby to initiate charging of the power converter from the AC network through the PIR.

The method may further comprise monitoring, by the controller, a time elapsed since providing the initiation command.

The method may further comprise monitoring, by the controller, a voltage of the power converter.

The step of acquiring information indicative of a fault in the power transmission network may comprise comparing, by the controller, the voltage of the power converter to a lower voltage threshold; and in response to the voltage of the power converter being lower than the lower voltage threshold for a specified period of time since providing the initiation command, determining, by the controller, the presence of a fault in the power transmission network.

The method may further comprise, in response to the voltage of the power converter remaining above the lower voltage threshold and below an upper voltage threshold for a specified period of time, providing, by the controller, a completion command to close the PIR bypass switch, whereby to bypass the PIR and connect the power converter to the AC network through the PIR bypass switch.

The step of acquiring information indicative of a fault in the power transmission network may comprise comparing, by the controller, the voltage to a voltage threshold; and in response to the voltage exceeding the voltage threshold, determining, by the controller, the presence of a fault in the power transmission network.

The method may further comprise monitoring, by the controller, a current of the power converter.

The step of acquiring information indicative of a fault in the power transmission network may comprise comparing, by the controller, the current to a current threshold; and in response to the current exceeding the current threshold, determining, by the controller, the presence of a fault in the power transmission network.

The PIR bypass switch and the PIR may be connected in parallel between the main circuit breaker and the power converter.

The PIR bypass switch and the PIR may be connected in parallel between a transformer and the power converter. The transformer may be connected to the main circuit breaker.

The PIR bypass switch and the PIR may be connected in parallel between the power converter and a power transmission medium.

The arrangement of components may further comprise a backup circuit breaker configured to disconnect the main circuit breaker from the AC network.

The method may further comprise monitoring, by the controller, the main circuit breaker after providing the second command; and in response to the main circuit breaker not opening within a time period, providing, by the controller, a third command to open the backup circuit breaker, whereby to disconnect the main circuit breaker from the AC network.

The third command may be to open only one phase, or two phases, or three phases, of the backup circuit breaker.

The fault may be a short circuit fault in the arrangement of components.

The fault may be a short circuit fault in a power transmission medium connected to the first power converter.

The fault may be a current flow into the power converter that is greater than a current threshold.

The fault may be a voltage of the power converter that is greater than a voltage threshold.

According to a second aspect, there is provided a controller for controlling an arrangement of components in a power transmission network, the arrangement of components comprising a power converter, a main circuit breaker, a pre-insertion resistor, PIR, and a PIR bypass switch. The PIR is configured to limit a current flowing through the power converter, the PIR bypass switch is configured to selectively insert or bypass the PIR, and the main circuit breaker is connected to an AC network. The controller is configured to acquire information indicative of a fault in the power transmission network. In response to acquiring the information indicative of a fault in the power transmission network: provide a first command to close the PIR bypass switch, whereby to bypass the PIR; and provide a second command to open the main circuit breaker, whereby to disconnect the power converter from the AC network.

Generally, the controller tends to be configured to execute the methods described herein.

The information indicative of a fault in the power transmission network may be indicative of a fault in only one phase, or two phases, or three phases, of the power transmission network.

The first command may be to close only one phase, or two phases, or three phases, of the PIR bypass switch.

The second command may be to open only one phase, or two phases, or three phases, of the main circuit breaker.

Acquiring may include determining, receiving, measuring, calculating, generating, and the likes.

The second command may be provided after the first command has been provided.

The second command may be provided simultaneously with the first command.

The controller may be further configured to provide an initiation command to close the main circuit breaker, whereby to initiate charging of the power converter from the AC network through the PIR.

The controller may be further configured to monitor a time elapsed since providing the initiation command.

The controller may be further configured to monitor a voltage of the power converter.

In order to acquire the information indicative of a fault in the power transmission network, the controller may be configured to compare the voltage of the power converter to a lower voltage threshold; and in response to the voltage of the power converter being lower than the lower voltage threshold for a specified period of time since providing the initiation command, determine the presence of a fault in the power transmission network.

In order to acquire the information indicative of a fault in the power transmission network, the controller may be configured to compare the voltage to a voltage threshold; and in response to the voltage exceeding the voltage threshold, determine the presence of a fault in the power transmission network.

The controller may be further configured to monitor a current of the power converter.

In order to acquire the information indicative of a fault in the power transmission network, the controller may be configured to compare the current to a current threshold; and in response to the current exceeding the current threshold, determine the presence of a fault in the power transmission network.

According to a third aspect, there is provided an arrangement of components for a power transmission network, the arrangement of components comprising a power converter; a main circuit breaker; a pre-insertion resistor, PIR; a PIR bypass switch; and the controller of the second aspect configured to control the arrangement of components. The PIR is configured to limit a current flowing through the power converter; the PIR bypass switch is configured to selectively insert or bypass the PIR; and the main circuit breaker is connected to an AC network.

The PIR may be, for example, only a single resistor.

The PIR may comprise a material comprising a metal alloy or ceramic.

The power converter may be a Voltage Source Converter.

The power converter may be a Modular Multilevel Converter.

The power converter may comprise capacitive or energy storage elements.

The capacitive or energy storage elements of the power converter may require charging during a startup or energisation process of the power converter.

The power converter may be for providing power conversion and may be connected to a power transmission medium.

The power transmission medium may be a High Voltage Direct Current (HVDC) line.

According to a fourth aspect, there is provided a HVDC transmission scheme comprising the arrangement of components of the third aspect.

The HVDC transmission scheme may be a symmetrical monopole scheme.

The HVDC transmission scheme may be a bipole scheme.

The HVDC transmission scheme may be an asymmetrical monopole scheme.

The HVDC transmission scheme may be a rigid bipole scheme.

According to a fifth aspect, there is provided a power transmission network comprising an AC network; a HVDC power transmission medium; and the arrangement of components of the third aspect. The arrangement of components is generally located between the AC network and the HVDC power transmission medium.

According to a sixth aspect, there is provided a computer program comprising instructions which when executed by a processor of a controller for controlling an arrangement of components, cause the controller to perform the method of the first aspect.

According to a seventh aspect, there is provided a non-transitory computer-readable storage medium comprising the computer program of the sixth aspect.

It will be appreciated that particular features of different aspects of the invention share the technical effects and benefits of corresponding features of other aspects of the invention. More specifically, the controller, the arrangement of components, the HVDC transmission scheme, the power transmission network, the computer program, and the non-transitory computer-readable medium, share the technical effects and benefits of the method of the invention.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples, and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### BRIEF DESCRIPTION OF THE DRAWINGS

Figure 1 is a schematic illustration of an embodiment of a power transmission network;
Figure 2 is a schematic illustration of an embodiment of an arrangement of components of the power transmission network; and
Figure 3 shows an embodiment of a method for controlling the arrangement of components.

### DETAILED DESCRIPTION

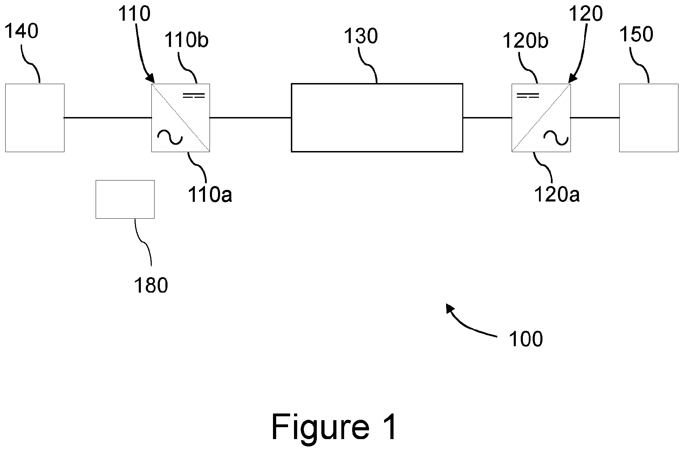

Figure 1 is a schematic illustration of a first embodiment of a power transmission network 100. The illustration is not intended to be limited to representing any particular type of power transmission network. For example, the power transmission network may be a monopole, bipole, or multiterminal High Voltage Direct Current transmission network. Hence whilst specific features in the illustration are shown connected to each other with a specific number of connections, it will be understood that this is not intended to be limiting either. Related, is that relative dimensions or distances between components perceived in the illustration are also not intended to be limiting.

The power transmission network 100 includes a first power converter 110 (also known as a converter station, power electronics-based resource, inverter, inverter station, etc.), a second power converter 120, a power transmission medium 130, a first AC network 140, a second AC network 150, and a controller 180.

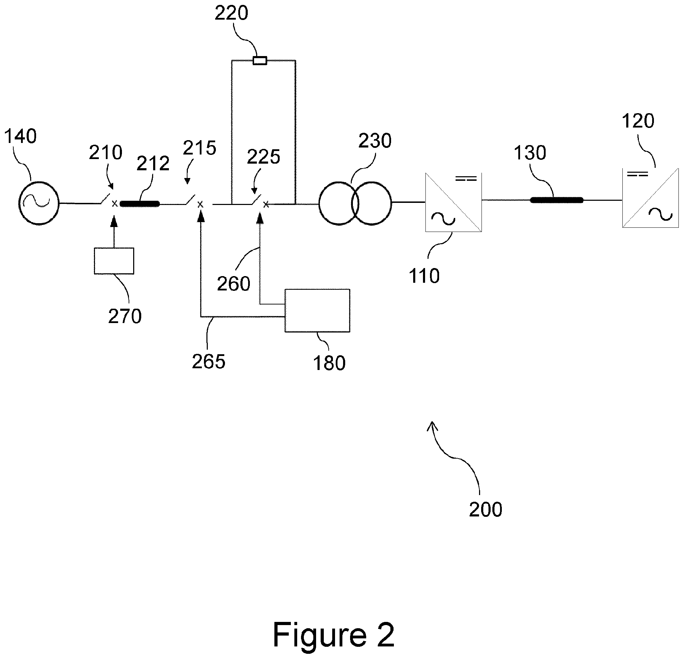

In this embodiment, the controller 180 is configured to control components of the power transmission network 100, as will be described in more detail later below in relation to Figure 2.

The power converters 110, 120, can convert AC power to DC power, acting essentially as rectifiers; or DC power to AC power, acting essentially as inverters. The power converters 110, 120 may each comprise a single converter in the case of a monopole system, or two converters in the case of a bipole system. The power converters 110, 120 may represent a plurality of converter stations arranged as a multi-terminal power transmission system. Generically, the first power converter 110 comprises a first AC side 110a and a first DC side 110b. Generically, the second power converter 120 comprises a second AC side 120a and a second DC side 120b.

The first power converter 110 is connected to a first AC network 140. The first AC network 140 is connected to the first AC side 110a of the first power converter 110. The second power converter 120 is connected to a second AC network 150. The second AC network 150 is connected to the second AC side 120a of the second power converter 120.

The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance. In particular examples, the power converters 110, 120 may be geographically remote. For instance, the first power converter 110 may reside on an off-shore platform with a wind farm, and the second power converter 120 may reside on-shore, or vice-versa.

The power transmission medium 130 connects the first power converter 110 and the second power converter 120. The power transmission medium 130 is connected between the first DC side 110b of the first power converter 110 and the second DC side 120b of the second power converter 120. The power transmission medium 130 may comprise electrical cables (or overhead lines) and other electrical components for connecting the first and second power converters 110, 120. For instance, the power transmission medium 130 may comprise a conductor providing a first electrical pole; and/or a conductor providing a second electrical pole. For bipole schemes, a neutral arrangement may also be provided interconnecting the first and second power converters 110, 120. The power transmission medium 130 provides the medium through which DC power is transferred between the power converters 110, 120.

The operation of the power transmission network 100 can be generically described as follows. The first AC network 140 generates AC power that is provided to the first power converter 110 at the first AC side 11 0a. The first power converter 110 converts the received AC power to DC power for transmission to the power transmission medium 130. The DC power is transmitted from the first DC side 110b of the first power converter 110 to the power transmission medium 130. The second DC side 120b of the second power converter 120 receives DC power from the power transmission medium 130. The second power converter 120 converts the received DC power to AC power. The AC power is then provided from the second AC side 120a of the second power converter 120 to the second AC network 150 for consumption, for instance.

Additionally, in some circumstances, the first power converter 110 can also receive power from the transmission medium 130. The first power converter 110 can thus be configured to transfer real or reactive power in either direction, into or out of the first AC network 140. The second power converter 120 can also be configured to transfer real or reactive power in either direction, into or out of the second AC network 150.

It will be appreciated that various other electrical components may be located at any particular location or with any particular feature/component in the example power transmission network 100. These may include power converter valves, switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use power electronics. Power electronic converters may comprise multi-level voltage sourced converters, for instance.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

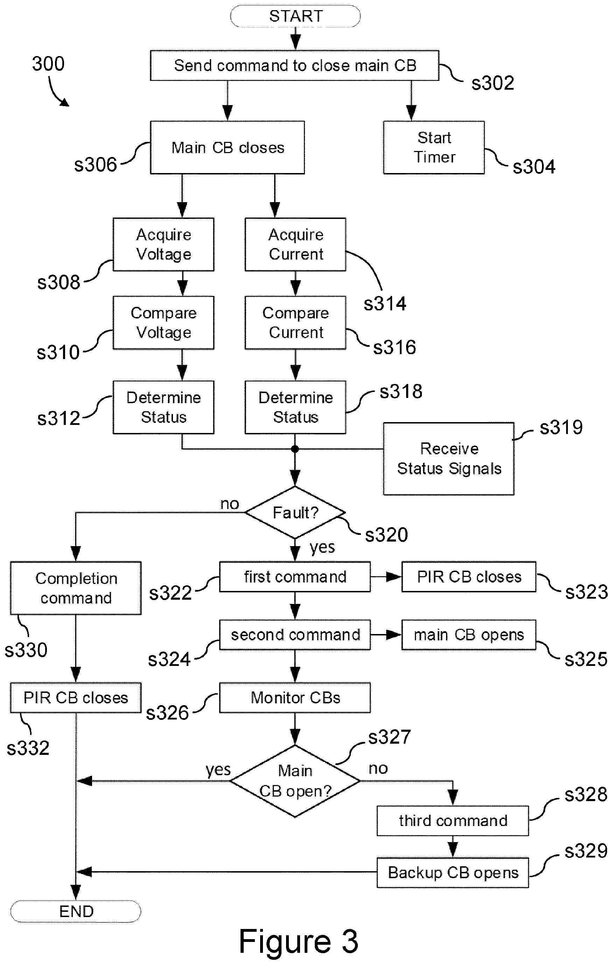

The controller 180 is configured to execute the methods disclosed herein, as will be described in more detail later below in relation to Figure 3.

The controller 180 may comprise a memory and at least one processor. The memory may comprise computer-readable instructions, which when executed by the at least one processor, cause the controller to perform one or more of the methods described herein.

The controller 180 may also comprise a transceiver arrangement which may comprise a separate transmitter and receiver. The transceiver arrangement may be used to operatively communicate with other components or features of embodiments described herein either directly or via a further interface such as a network interface. The transceiver arrangement may for instance send and receive control signals using transmitter and receiver. The control signals may contain or define electrical control parameters such as reference currents or reference voltages.

The at least one processor is capable of executing computer-readable instructions and/or performing logical operations. The at least one processor may be a microcontroller, microprocessor, central processing unit (CPU), field programmable gate array (FPGA) or similar programmable controller. The processor is communicatively coupled to the memory and may in certain embodiments be coupled to the transceiver.

The memory may be a computer readable storage medium. For instance, the memory may include a non-volatile computer storage medium. For example, the memory may include a hard disk drive, flash memory etc.

The controller 180 may further comprise a user input device and/or output device.

The controller 180 may additionally include a user input device interface and/or a user output device interface, which may allow for visual, audible, or haptic inputs/outputs. Examples include interfaces to electronic displays, touchscreens, keyboards, mice, speakers, and microphones.

Figure 2 is a schematic illustration showing, in more detail, a portion of the power transmission network 100, which is hereinafter referred to as an arrangement of components 200. In this embodiment, the arrangement of components 200 comprises the first power converter 110, the controller 180, a backup circuit breaker 210, a main circuit breaker 215, a pre-insertion resistor (PIR) 220, a PIR bypass switch 225, a transformer 230, and a backup circuit breaker controller 270.

The arrangement of components 200 may also comprise the first AC network 140, the power transmission medium 130, and the second power converter 120.

In this embodiment, the first AC network 140 is connected to the backup circuit breaker 210. The backup circuit breaker 210 is connected in series between the first AC network 140 and the main circuit breaker 215. The backup circuit breaker 210 is connected to the main circuit breaker 215 via an AC power transmission medium 212. The AC power transmission medium 212 may be, for example, a cable or overhead line.

The main circuit breaker 215 is connected in series between the backup circuit breaker 210 (i.e., at a terminal end of the AC power transmission medium 212) and the PIR bypass switch 225.

The PIR bypass switch 225 is connected in series between the main circuit breaker 215 and the transformer 230. The pre-insertion resistor 220 is connected in parallel with the PIR bypass switch 225. Thus, the pre-insertion resistor 220 is also in series between the main circuit breaker 215 and the transformer 230. The pre-insertion resistor 220 is configured to limit a current flowing through the first power converter 110. The PIR bypass switch 225 is configured to selectively insert or bypass the pre-insertion resistor 220.

The transformer 230 is connected in series between the PIR bypass switch 225 and the first AC side 110a of the first power converter 110. As discussed above in relation to Figure 1, the first DC side 110b of the first power converter 110 is connected to the power transmission medium 130.

In this embodiment, the pre-insertion resistor 220 may be any type of resistor. For example, the pre-insertion resistor 220 may be a metal alloy resistor, a ceramic type of resistor, or a resistor made from any other suitable material.

In this embodiment, the controller 180 is communicatively coupled to the PIR bypass switch 225 via a first communication link 260. The controller 180 is communicatively coupled to the main circuit breaker 215 via a second communication link 265.

The first communication link 260 may be a wireless or wired communication link. The second communication link 265 may be a wireless or wired communication link.

The controller 180 is configured to communicate data, information, and/or commands to the PIR bypass switch 225 via the first communication link 260. The controller 180 is configured to communicate data, information, and/or commands to the main circuit breaker 215 via the second communication link 265. The controller 180 is also configured to communicate data, information, and/or commands to the backup circuit breaker controller 270.

In this embodiment, the backup circuit breaker controller 270 is configured to control the backup circuit breaker 210. The backup circuit breaker controller 270 is located proximal to the backup circuit breaker 210. The backup circuit breaker controller 270 uses measurements of electrical parameters taken directly from, or close to, the backup circuit breaker 210 in order to control the backup circuit breaker 210. The backup circuit breaker controller 270 is also configured to control the backup circuit breaker 210 in accordance with a time delay with respect to main circuit breaker 215.

The controllers 180, 270 are thus able to provide commands to, and receive information from, the switches 210, 215, 225. The switches 210, 215, 225 are configured to implement the commands provided by the controllers 180, 270 by opening or closing. When the switches 210, 215, 225 open or close, the configuration of the arrangement of components 200 changes. Therefore, by providing desired commands to the switches 210, 215, 225, the controllers 180, 270 are capable of controlling a configuration of the arrangement of components 200.

The controller 180 is also configured to receive data or information from, e.g., components of the arrangement of components 200. The data or information received from the arrangement of components 200 may be related to any electrical parameter of the arrangement of components 200. Such data or information may be indicative of one or more of: a power flow into or out of the first power converter 110; a voltage and/or a current of the first power converter 110; a voltage and/or a current of the transformer 230; a voltage and/or a current of the pre-insertion resistor 220; a voltage and/or a current of the switches 210, 215, 225; or any other electrical parameter related to the arrangement of components 200.

In this embodiment, the main circuit breaker 215 may be rated at 420kV. The backup circuit breaker 210 may be rated at 420kV. The PIR bypass switch 225 may be rated at 420kV.

In this embodiment, the first power converter 110 is a Voltage Source Converter suitable for High Voltage Direct Current applications. The first power converter 110 comprises capacitive elements that need to be energised in order to start operation of the first power converter 110.

As discussed above, a conventional process to energise a power converter may involve connecting a relatively high voltage source (for example, from an AC network), through a main circuit breaker and a pre-insertion resistor, to the power converter. The rate at which the power converter charges tends to be limited by the ohmic value of the pre-insertion resistor. However, conventionally, the pre-insertion resistor tends to require a higher power or energy rating than is needed for successful energisation. This is because, if a fault were to occur in the power transmission network during the energisation process, and the main circuit breaker did not open, then a fault current would flow through the pre-insertion resistor until the backup circuit breaker opened. As a result, the pre-insertion resistor tends to be required to withstand a relatively large fault current for a relatively long duration. Such pre-insertion resistors tend to be relatively large and costly. Advantageously, the systems and methods described herein tend to allow for use of smaller, lighter, and/or lower cost pre-insertion resistors.

The present inventors have realised that, in a fault event, if the pre-insertion resistor can be bypassed from the circuit at the same time as, or even prior to, the main circuit breaker opening, then the pre-insertion resistor tends not to be required to withstand the large fault current for the relatively longer duration. As such, the systems and methods described herein tend to allow use of pre-insertion resistors that have a lower energy rating requirement compared to a conventional pre-insertion resistor.

Pre-insertion resistors with lower energy ratings tend to be able to be manufactured from less costly materials compared to higher rated resistors. This tends to reduce overall cost, utilise less material, reduce size and footprint.

Figure 3 is process flow chart showing certain steps of a method 300 for controlling the arrangement of components 200. In the first embodiment, the controller 180 is configured to implement certain steps of the method 300, and the backup circuit breaker controller 270 is also configured to implement certain steps of the method 300.

In this embodiment, prior to implementing the method 300, the first power converter 110 is not operating (for example, the first power converter 110 is not energised), the main circuit breaker 215 is open and the backup circuit breaker 210 is closed. The PIR bypass switch 225 is open, such that the pre-insertion resistor 220 is inserted and configured to limit any current that would flow through the first power converter 110.

At step s302, the controller 180 provides an initiation command to close the main circuit breaker 215. The initiation command includes data, information, or instructions, that when executed cause the main circuit breaker 215 to close.

At step s304, the controller 180 begins a timer to measure the time elapsed since providing the initiation command at step s302.

At step s306, the main circuit breaker 215 receives the initiation command and closes.

Once the main circuit breaker 215 has closed, and because the PIR bypass switch 225 is open, the first power converter 110 will begin charging, or energising, from the first AC network 140 through the pre-insertion resistor 220.

In other words, a current will flow from the first AC network 140, through the backup circuit breaker 210, through the main circuit breaker 215, through the pre-insertion resistor 220, through the transformer 230, and into the first power converter 110.

The rate of charging or energisation of the first power converter 110 will be determined by the magnitude of the current flowing into the first power converter 110, which will be limited by the ohmic value of the pre-insertion resistor 220.

In this embodiment, the ohmic value of the pre-insertion resistor 220 is equal to or greater than 1,000 ohms. In this embodiment, the ohmic value of the pre-insertion resistor 220 is equal to or less than 1,500 ohms.

The charging of the first power converter 110 is a part of a normal operation of the arrangement of components 200. After the first power converter 110 has started the charging process, as a result of completing step s306, the method 300 then proceeds to steps s308 to s318.

At step s308, the controller 180 acquires voltage information from the first power converter 110. The voltage information is indicative of a voltage level of the first power converter 110.

At step s310, the controller 180 compares the voltage level of the first power converter 110 to an upper voltage threshold and to a lower voltage threshold.

At step s312, the controller 180 uses the output of the comparison of step s310 to determine if the first power converter 110 has successfully charged or if there is a fault in the power transmission network 100.

If the voltage level of the first power converter 110 is maintained at a level below the upper voltage threshold and above the lower voltage threshold for greater than or equal to a specified period of time, the controller 180 determines that the first power converter 110 is operating normally, and energisation is successful.

However, if the voltage level of the first power converter 110 exceeds the upper voltage threshold (e.g. for a predefined time period), or is lower than the lower voltage threshold (e.g. for a predefined time period), then the controller 180 determines that a fault has occurred in the power transmission network 100.

Thus, at step s312, by using the comparison information from step s310 and timing information from step s304, the controller 180 determines whether the first power converter 110 is operating normally and that the energisation process is complete, or if a fault has occurred in the power transmission network 100.

In this manner, the controller 180 acquires information indicative of a fault in the power transmission network 100, by determining if there is a fault in the power transmission network 100

At step s314, the controller acquires current information from the first power converter 110. The current information is indicative of a current flowing into the first power converter 110.

At step 316, the controller 180 compares the current to a current threshold.

At step s318, the controller 180 uses the output of the comparison of step s316 to determine if there is a fault in the power transmission network 100.

The current threshold is a maximum amount of current that is permitted to flow into the first power converter 110 in order for the first power converter 110 to be considered as operating normally.

If the maximum amount of current flowing into the first power converter 110 is not exceeded e.g. for greater than or equal to a specified period of time, then the controller 180 determines that the first power converter 110 is operating normally.

However, if the maximum amount of current flowing into the first power converter 110 is exceeded, e.g. for greater than or equal to a specified period of time, then the controller 180 determines that a fault has occurred in the power transmission network 100.

Thus, at step s318, by using the comparison information from step s316, the controller determines if the first power converter 110 is operating normally, or if a fault has occurred in the power transmission network 100.

In this manner, the controller 180 acquires information indicative of a fault in the power transmission network 100, by determining if there is a fault in the power transmission network 100.

At step s319, the controller 180 may receive information indicative of a fault in the power transmission network 100 or information indicative that the first power converter 110 is operating normally and that the energisation process is complete. The controller 180 may receive the information from a controller external to the arrangement of components 200, or from another component or controller in the arrangement of components 200 (not shown).

In this manner, the controller 180 acquires information indicative of a fault in the power transmission network 100, by receiving information indicative of a fault in the power transmission network 100.

At step s320, the controller 180 assesses whether there is a fault in the power transmission network 100 or whether the first power converter 110 is operating normally and that the energisation process is complete, by evaluating information output from at least one of the steps s312, s318, and s319. If at least one of the steps s312, s318 and s319 outputs information indicative of a fault in the power transmission network 100, then the controller 180 determines that a fault is present. If all three of the steps s312, s318 and s319 do not output any information, or output information indicative that a fault is not present in the power transmission network 100 and/or output information indicative that the first power converter 110 is operating normally and that the energisation process is complete, then the controller 180 determines that the first power converter 110 is operating normally and that the energisation process is complete.

In response to the controller 180 determining that a fault is present in the power transmission network 100, the method 300 proceeds to step s322.

On the other hand, in response to the controller 180 determining that there is not a fault present in the power transmission network 100 and/or that the energisation process is complete, then the method 300 proceeds to step s330, which is described in more detail later below after the description of steps s322 to s329.

The fault may be, for example, a short circuit fault in the arrangement of components 200, or a short circuit fault in a power transmission medium 130 connected to the first power converter 110. The fault may lead to a current flow into the first power converter 110 which is greater than the current threshold. The fault may lead to a voltage of the first power converter 110 that is greater than the upper voltage threshold. The fault may lead to a voltage of the first power converter 110 that is lower than the lower voltage threshold. The fault may lead to the voltage of the first power converter 110 not maintaining a voltage level that is between the upper voltage threshold and the lower voltage threshold for the specified period of time.

At the step s322, the controller 180 provides a first command to close the PIR bypass switch 225. The first command is sent to the PIR bypass switch 225 from the controller 180 via the first communication link 260.

At step s323, the PIR bypass switch 225 receives the first command and closes.

Closing the PIR bypass switch 225 effectively causes the pre-insertion resistor 220 to be bypassed, as the PIR bypass switch 225 provides a near zero resistance path for the current from the first AC network 140 to the first power converter 110. As a result, all of the current flowing from the first AC network 140 to the first power converter 110 will now flow through the PIR bypass switch 225, and no current will flow through the pre-insertion resistor 220.

At a step s324 the controller 180 provides a second command to open the main circuit breaker 215. The second command is sent to the main circuit breaker 215 from the controller 180 via the second communication link 265.

At step s325, the main circuit breaker 215 opens upon receiving the second command. Opening the main circuit breaker 215 causes the first power converter 110 to disconnect from the first AC network 140.

By providing the first command to close the PIR bypass switch 225, the pre-insertion resistor 220 is bypassed and as a result tends not to need to withstand the fault current for the relatively longer duration. As such, it tends to be the case that the pre-insertion resistor 220 can be physically smaller than a conventional pre-insertion resistor, and/or have a lower energy rating.

At step s326, the backup circuit breaker controller 270 monitors each phase of the main circuit breaker 215 to check that each phase of the main circuit breaker 215 has successfully opened within a time limit (for example, an expected opening time of the main circuit breaker 215 determined from when the second command is provided).

At step s327, the backup circuit breaker controller 270 uses measurements of electrical parameters taken directly from, or close to, the backup circuit breaker 210 in order to control the backup circuit breaker 210. The backup circuit breaker controller 270 may control the backup circuit breaker 210 in accordance with a time delay with respect to main circuit breaker 215. Using the measurements of electrical parameters, the backup circuit breaker controller 270 may determine whether each phase of the main circuit breaker 215 has successfully opened within a time limit.

If, at step s327, the backup circuit breaker controller 270 determines that each phase has successfully opened, then the controller 180 determines that the first power converter 110 has been successfully disconnected from the first AC network 140, and the method 300 ends.

However, if at step s327, the backup circuit breaker controller 270 determines that at least one of the phases has not successfully opened, then the backup circuit breaker controller 270 determines that there is potentially a fault within the main circuit breaker 215, and the method proceeds to a step s328.

At step s328, in response to one or more phases of the main circuit breaker 215 not successfully opening, the backup circuit breaker controller 270 sends a third command to the backup circuit breaker 210, whereby to cause the backup circuit breaker 210 to open.

At step s329, the backup circuit breaker 210 opens upon receiving the third command. Opening the backup circuit breaker 210 disconnects the main circuit breaker 215 from the first AC network 140. Thus, if a fault were present in the main circuit breaker 215, the first power converter 110 can still be disconnected from the first AC network 140.

After performing step s329, the first power converter 110 has been successfully disconnected from the first AC network 140, and the method 300 ends.

As discussed above, at step s320 the controller 180 assess whether there is a fault in the power transmission network 100, or whether there is not a fault present in the power transmission network 100 and that the energisation process is complete. In response to there not being a fault present in the power transmission network 100 and the energisation process being complete, the method 300 proceeds to step s330.

At step s330, the controller 180 provides a completion command to the PIR bypass switch 225 via the first communication link 260. The completion command instructs the PIR bypass switch 225 to close.

At step s332, the PIR bypass switch 225 receives the completion command and closes. Closing the PIR bypass switch 225 causes the first power converter 110 to connect to the first AC network 140 through the PIR bypass switch 225 and bypass the pre-insertion resistor 220. In this manner, the first power converter 110 has been energised, the pre-insertion resistor 220 has been bypassed, and the first power converter 110 can begin performing normal operation. This step tends to ensure that the pre-insertion resistor 220 is bypassed relatively quickly after the successful energisation, which tends to reduce the chance of a subsequent fault stressing the pre-insertion resistor 220.

After step s332, the method 300 ends.

It should be noted that certain process steps depicted in the flowchart of Figure 3 and described above may be omitted or such process steps may be performed in a differing order to that presented above and shown in Figure 3.

Furthermore, although all the process steps have, for convenience and ease of understanding, been depicted as discrete temporally-sequential steps, nevertheless some of the process steps may in fact be performed simultaneously or at least overlapping to some extent temporally.

In particular, the steps s322 and s324 may be performed such that the first command to close the PIR bypass switch 225 and the second command to open the main circuit breaker 215 are provided simultaneously.

Alternatively, the step s322 may be performed after step s324, such that the second command is provided after the first command has been provided. Providing the second command after the first command tends to ensure that substantially all of the fault current flows through the PIR bypass switch 225 before the main circuit breaker 215 is opened. This tends to ensure that the pre-insertion resistor 220 does not have to withstand substantially any of the fault current when the main circuit breaker closes.

Although in the first embodiment, the controller 180 receives information indicative of voltage and current of the power converter, it is to be understood that embodiments should not be limited in this way. For example, in another embodiment, the controller 180 may receive information indicative of any electrical parameter of the arrangement of components 200, or the first power converter 110, that may be useful in determining if a fault has occurred in the power transmission network 100, or if the first power converter 110 is operating normally and has been successfully energised.

Although in the first embodiment, the controller 180 evaluates information output from all of the steps s312, s318, and s319, in order to determine if a fault is present in the power transmission network 100 or whether the first power converter 110 has been successfully energised, it is to be understood that embodiments should not be limited in this way.

For example, in another embodiment, the controller 180 evaluates information from only one of the steps s312, s318, s319. For example, the controller 180 may utilise information from the step s312 only. Thus, the steps s314, s316, s318, and s319 may be omitted. Similarly, in other embodiments, steps s308, s310, s312, and s319 may be omitted. Similarly, in other embodiments, steps s308, s310, s312, s314, s316, and s318 may be omitted.

Also for example, in another embodiment, the controller 180 evaluates information from exactly two of the steps s312, s318, s319. For example, in some embodiments, the controller 180 may evaluate information from the steps s312 and s319 only, and the steps s314, s316, and s318 are omitted. Similarly, in other embodiments, the controller 180 may evaluate information from the steps s318 and s319 only, and the steps s308, s310, and s312 are omitted. Similarly, in other embodiments, the controller 180 may evaluate information from the steps s312 and s318 only, and the step s319 is omitted.

In the above embodiments, the PIR bypass switch 225 and the pre-insertion resistor 220 are connected in parallel between the main circuit breaker 215 and the transformer 230. However, it is to be understood that embodiments should not be limited in this way. For example, in other embodiments, the PIR bypass switch 225 and the pre-insertion resistor 220 are connected in parallel generally in any location within the power transmission network 100 such that the pre-insertion resistor 220 is configured to limit a current flowing through the first power converter 110, and the PIR bypass switch 225 is configured to selectively insert or bypass the pre-insertion resistor 220.

For example, in other embodiments, the PIR bypass switch 225 and the pre-insertion resistor 220 are connected in parallel between the main circuit breaker 215 and the first power converter 110.

Also for example, in other embodiments, the PIR bypass switch 225 and the pre-insertion resistor 220 are connected in parallel between the transformer 230 and the first power converter 110.

Also for example, in other embodiments, the PIR bypass switch 225 and the pre-insertion resistor 220 are connected in parallel between the first power converter 110 and the power transmission medium 130.

In the above embodiments, the backup circuit breaker 210 is controlled by the backup circuit breaker controller 270. However, it is to be understood that embodiments should not be limited in this way. For example, in other embodiments, the controller 180 is communicatively coupled directly to the backup circuit breaker 210. In such embodiments, the controller 180 is configured to control the backup circuit breaker 210.

In the above embodiments, the main circuit breaker 215 may be rated at 420kV, the backup circuit breaker 210 may be rated at 420kV, and the PIR bypass switch 225 may be rated at 420kV. However, it is to be understood that embodiments should not be limited in this way. In particular, one or more of the main circuit breaker, the backup circuit breaker, and/or the PIR bypass switch may have a different rating to that given above. For example, the main circuit breaker 215 may be rated at a value equal to or greater than 300kV, and/or the backup circuit breaker 210 may be rated at a value equal to or greater than 300kV, and/or the PIR bypass switch 225 may be rated at a value equal to or greater than 300kV.

In the above embodiments, the ohmic value of the pre-insertion resistor 220 is 1,000 ohms to 1,500 ohms. However, it is to be understood that embodiments should not be limited in this way. In particular, the ohmic value of the pre-insertion resistor 220 may be different to the example disclosed in the first embodiment. For example, the ohmic value of the pre-insertion resistor 220 may be less than 1,000 ohms or greater than 1,500 ohms.

## Claims

1. A method for controlling an arrangement of components in a power transmission network, the arrangement of components comprising a power converter, a main circuit breaker, a pre-insertion resistor, PIR, and a PIR bypass switch, wherein the PIR is configured to limit a current flowing through the power converter, the PIR bypass switch is configured to selectively insert or bypass the PIR, the main circuit breaker is connected to an AC network, the main circuit breaker is initially closed, and the PIR bypass switch is initially open such that the PIR is inserted and configured to limit the current flowing through the power converter; the method comprising:
acquiring, by a controller, information indicative of a fault in the power transmission network;
in response to acquiring the information indicative of a fault in the power transmission network:
providing, by the controller, a first command to close the PIR bypass switch, whereby to bypass the PIR; and
providing, by the controller, a second command to open the main circuit breaker, whereby to disconnect the power converter from the AC network.

2. The method of claim 1, wherein
the second command is provided after the first command has been provided; or
the second command is provided simultaneously with the first command.

3. The method of any preceding claim, wherein prior to the main circuit breaker being initially closed, the main circuit breaker is open, and the method further comprises:
providing, by the controller, an initiation command to close the main circuit breaker, whereby to initiate charging of the power converter from the AC network through the PIR.

4. The method of claim 3, further comprising:
monitoring, by the controller, a time elapsed since providing the initiation command; and
monitoring, by the controller, a voltage of the power converter;
wherein the step of acquiring information indicative of a fault in the power transmission network comprises:
comparing, by the controller, the voltage of the power converter to a lower voltage threshold; and
in response to the voltage of the power converter being lower than the lower voltage threshold for a specified period of time since providing the initiation command, determining, by the controller, the presence of a fault in the power transmission network.

5. The method of claim 4, further comprising:
in response to the voltage of the power converter remaining above the lower voltage threshold and below an upper voltage threshold for a specified period of time, providing, by the controller, a completion command to close the PIR bypass switch, whereby to bypass the PIR and connect the power converter to the AC network through the PIR bypass switch.

6. The method of any preceding claim, further comprising:
monitoring, by the controller, a voltage and/or a current of the power converter;
wherein the step of acquiring information indicative of a fault in the power transmission network comprises:
comparing, by the controller, the voltage to a voltage threshold and/or the current to a current threshold; and
in response to the voltage exceeding the voltage threshold, and/or the current exceeding the current threshold, determining, by the controller, the presence of a fault in the power transmission network.

7. The method of any preceding claim, wherein
the PIR bypass switch and the PIR are connected in parallel between the main circuit breaker and the power converter; or
the PIR bypass switch and the PIR are connected in parallel between a transformer and the power converter, wherein the transformer is connected to the main circuit breaker; or
the PIR bypass switch and the PIR are connected in parallel between the power converter and a power transmission medium.

8. The method of any preceding claim, wherein the fault comprises one or more faults selected from the group of faults consisting of:
a short circuit fault in the arrangement of components;
a short circuit fault in a power transmission medium connected to the first power converter;
a current flow into the power converter that is greater than a current threshold; and
a voltage of the power converter that is greater than a voltage threshold.

9. A controller for controlling an arrangement of components in a power transmission network, the arrangement of components comprising a power converter, a main circuit breaker, a pre-insertion resistor, PIR, and a PIR bypass switch, wherein the PIR is configured to limit a current flowing through the power converter, the PIR bypass switch is configured to selectively insert or bypass the PIR, and the main circuit breaker is connected to an AC network; the controller configured to:
acquire information indicative of a fault in the power transmission network;
in response to acquiring the information indicative of a fault in the power transmission network:
provide a first command to close the PIR bypass switch, whereby to bypass the PIR; and
provide a second command to open the main circuit breaker, whereby to disconnect the power converter from the AC network.

10. The controller of claim 9, wherein the controller is further configured to:
provide an initiation command to close the main circuit breaker, whereby to initiate charging of the power converter from the AC network through the PIR.

11. The controller of claim 10, wherein the controller is further configured to:
monitor a time elapsed since providing the initiation command; and
monitor a voltage of the power converter;
wherein to acquire the information indicative of a fault in the power transmission network, the controller is configured to:
compare the voltage of the power converter to a lower voltage threshold; and
in response to the voltage of the power converter being lower than the lower voltage threshold for a specified period of time since providing the initiation command, determine the presence of a fault in the power transmission network.

12. The controller of any one of claims 9 to 11, wherein the controller is further configured to:
monitor a voltage and/or a current of the power converter;
wherein to acquire the information indicative of a fault in the power transmission network, the controller is configured to:
compare the voltage to a voltage threshold and/or the current to a current threshold; and
in response to the voltage exceeding the voltage threshold and/or the current exceeding the current threshold, determine the presence of a fault in the power transmission network.

13. An arrangement of components for a power transmission network, the arrangement of components comprising:
a power converter;
a main circuit breaker;
a pre-insertion resistor, PIR;
a PIR bypass switch; and
the controller of any one of claims 9 to 12, configured to control the arrangement of components; wherein
the PIR is configured to limit a current flowing through the power converter;
the PIR bypass switch is configured to selectively insert or bypass the PIR; and
the main circuit breaker is connected to an AC network.

14. The arrangement of components of claim 13, wherein the PIR is only a single resistor.

15. The arrangement of components of claim 13 or 14, wherein the PIR comprises a material comprising a metal alloy or ceramic.
